# FASCICULE DE BREVET EUROPEEN

(11) **EP 1 907 629 B1**
(45) Date de publication et mention de la délivrance du brevet: **11.02.2009**
(21) Numéro de dépôt: 06794223.5
(22) Date de dépôt: 26.07.2006
(51) Int. Cl.: E01D 15/127, E01D 15/22, B60F 3/00

(54) **Système de transport d'une travure par un véhicule routier pouvant être transformé en véhicule amphibie pour permettre à tout véhicule routier de franchir une brèche seche ou remplie d'eau**
Amphibienfahrzeug mit einem Fahrweg zur Ermöglichung der Überquerung einer trockenen oder wassergefüllten Kluft durch jegliches Strassenfahrzeug
System for transporting a span on a road vehicle capable of being transformed into an amphibious vehicle enabling the crossing of a dry or water-filled gap by any road vehicle

(30) Priorité: 27.07.2005 FR 0508017
(43) Date de publication de la demande: 09.04.2008
(73) Titulaire: CONSTRUCTIONS INDUSTRIELLES DE LA MEDITERRANEE- CNIM, F-75008 Paris (FR)
(72) Inventeur: RICHEUX, Elisabeth, F-13600 La Ciotat (FR); AUBERT, Henri, F-83110 Sanary (FR)
(74) Mandataire: Thinat, Michel
(86) Numéro de dépôt international: PCT/FR2006/001825
(87) Numéro de publication internationale: WO 2007/012757

(56) Documents cités:
- FR-A- 1 595 119
- FR-A- 2 175 710
- FR-E- 82 502

## Description

La présente invention concerne un système de transport par un véhicule routier d'au moins une travure et de dépose à partir du véhicule de la travure au-dessus d'une brèche sèche pour permettre à tout véhicule routier de franchir la brèche en circulant sur la travure déposée sur cette brèche.

De tels systèmes sont connus par exemple dans le brevet français n° 2 666 772 et le brevet français n° 2 683 837 au nom de la demanderesse, et le brevet français n° 1 595 119.

Cependant, ces systèmes connus ne sont pas adaptés au franchissement de brèches humides, c'est -à-dire remplies d'eau, d'une largeur telle que la travure ne peut les couvrir.

On connaît également l'utilisation de ponts flottants modulaires pouvant être mis bout à bout pour couvrir toutes les largeurs de brèches humides et permettre leur franchissement par tout véhicule routier. Cependant, ces ponts flottants ne peuvent pas être utilisés pour le franchissement de brèches sèches.

La présente invention a pour but d'éliminer les inconvénients ci-dessus en proposant un système de transport d'au moins une travure par un véhicule routier amphibie de manière à l'utiliser soit pour la dépose de la travure au-dessus d'une brèche sèche, soit en bac ou pont flottant pour le franchissement d'une brèche humide quelle que soit la largeur de cette dernière.

A cet effet, selon l'invention, le système de transport par un véhicule routier d'au moins une travure et de dépose à partir du véhicule de la travure au-dessus d'une brèche sèche pour permettre à tout véhicule routier de franchir la brèche, le système comportant ledit véhicule routier et ladite travure, est caractérisé en ce que le véhicule de transport de la travure est amphibie pour permettre à tout véhicule routier de franchir une brèche remplie d'eau en transférant et transportant ce véhicule sur la travure reposant sur le véhicule amphibie fonctionnant en bac flottant.

Le véhicule amphibie est de préférence pourvu d'un ou plusieurs ballasts latéraux gonflables, tels que boudins, permettant d'augmenter la flottabilité et la stabilité du véhicule amphibie.

Les suspensions notamment hydrauliques du véhicule amphibie peuvent être pilotées pour relever les essieux du véhicule qui comprend un dispositif à turbines de propulsion aquatique de ce véhicule.

La travure s'étend longitudinalement au véhicule de transport et comprend deux caissons parallèles sensiblement parallélépipédiques jumelés définissant deux voies de roulement supérieures et deux rampes d'accès aux voies de roulement articulées respectivement aux deux extrémités des caissons autour d'un axe transversal et des moyens sont prévus pour permettre le pivotement de chaque rampe d'une position inactive rabattue sur le caisson correspondant à une position active déployée en prolongement du caisson à laquelle la rampe d'accès est maintenue lorsque la travure est utilisée pour franchir une brèche sèche ou à laquelle la rampe d'accès peut être ajustée à une position angulaire déterminée de part et d'autre de sa position en prolongement du caisson lorsque le véhicule est utilisé en bac flottant de manière à adapter la rampe au profil de la berge de la brèche remplie d'eau lorsque la rampe doit être en appui sur cette berge pour le transfert de tout véhicule de la berge sur la travure ou le transfert du véhicule de la travure sur la berge.

De préférence, les moyens de pivotement de chaque rampe d'accès comprennent un vérin commandé monté dans le caisson correspondant de la travure et deux biellettes ayant deux de leurs extrémités articulées ensemble à l'extrémité de la tige du vérin et leurs extrémités opposées articulées respectivement à la face interne de la paroi supérieure de roulement du caisson parallélépipédique et à la face interne de la paroi inférieure du caisson de la rampe.

La travure du véhicule fonctionnant en bac flottant peut être amoviblement reliée bout à bout par des moyens de liaison à une autre travure identique d'un autre véhicule fonctionnant en bac flottant pour constituer un pont flottant de plus grande longueur.

Les moyens de liaison permettent de relier bout à bout les extrémités des deux rampes d'accès déployées d'une même extrémité de la travure du véhicule amphibie respectivement aux extrémités des deux rampes d'accès déployées d'une même extrémité de la travure de l'autre véhicule amphibie.

Les moyens de liaison comprennent une charnière d'articulation dont les charnons des extrémités de l'une des rampes d'accès s'engagent respectivement dans des évidements conjugués de l'extrémité de l'autre rampe d'accès opposée, une broche passant au travers des évidements et des charnons pour assembler les unes aux autres les extrémités des rampes, et des jeux de biellettes disposés de chaque côté des rampes mises bout à bout, comprenant une biellette centrale reliée à une extrémité correspondante de la broche en s'étendant en dessous des rampes et deux biellettes latérales reliées d'une part à l'extrémité de la biellette centrale à l'opposé de la broche et d'autre part respectivement aux côtés correspondants des rampes.

Selon une variante de réalisation, les moyens de liaison permettent de relier bout à bout les extrémités de deux rampes d'accès d'une même extrémité de la travure du véhicule amphibie et occupant leur position rabattue sur la travure respectivement aux extrémités des deux rampes d'accès d'une même extrémité de la travure de l'autre véhicule amphibie et occupant également leur position rabattue sur cette travure.

Selon encore une autre variante de réalisation, les moyens de liaison permettent de relier par recouvrement les extrémités des deux rampes d'accès déployées d'une même extrémité de la travure du véhicule amphibie aux extrémités des deux rampes d'accès déployées d'une même extrémité de la travure de l'autre véhicule amphibie.

Avantageusement, les deux rampes d'une même extrémité de la travure sont pourvues d'une plaque disposée entre les deux rampes et dont l'extrémité libre est relevée à la manière d'un ski.

Le système comprend, pour la dépose de la travure au-dessus d'une brèche sèche, une poutre de support et de lancement de la travure disposée approximativement dans l'axe longitudinal du véhicule, déplaçable relativement au véhicule suivant cet axe entre une position inactive reposant sur le véhicule et une position de lancement en porte-à-faux relativement au véhicule à laquelle la travure est entraînée en translation guidée sur la poutre de lancement également à une position en porte-à-faux relativement à la poutre de lancement qui est supportée par un châssis orientable en pouvant translater de façon guidée sur celui-ci, le châssis basculant autour d'un axe fixe horizontal pour permettre à la poutre de pivoter jusqu'à ce que la travure vienne en appui d'abord par son extrémité en porte-à-faux sur le bord de la brèche opposé à celui situé du côté du véhicule, puis par son extrémité opposée sur le bord de brèche côté véhicule, la poutre de lancement étant ensuite désengagée de la travure qui est déposée sur la brèche.

Le système comprend avantageusement au moins un vérin de reprise d'efforts situé à l'arrière du véhicule en dessous de la poutre et dont le corps est fixé au châssis du véhicule et la tige est en appui glissant sous la poutre, le vérin pouvant être commandé pour faire basculer la poutre autour de l'axe de pivotement du châssis basculant vers le bas pour également amener l'extrémité de la travure en appui sur le bord correspondant de la brèche à franchir.

Le système comprend également des moyens de brêlage de la poutre au châssis du véhicule et comprenant un cadre rigide solidaire perpendiculairement du châssis et deux mâchoires montées articulées au cadre et commandées par un vérin monté sur le cadre de manière que chaque mâchoire puisse enserrer une partie inférieure correspondante de la poutre.

Le système est aérotransportable par avion.

Le véhicule comprend en avant de celui-ci un pied de stabilisation pouvant venir en appui sur le sol lors de la dépose de la travure au-dessus de la brèche sèche et pendant laquelle le véhicule repose sur ses essieux.

L'invention vise également un procédé de transfert et de transport d'un véhicule sur une travure portée par un véhicule amphibie pour le franchissement d'une brèche remplie d'eau et utilisant le système tel que décrit précédemment, et qui est caractérisé en ce qu'il consiste à rapprocher le véhicule amphibie de l'une des berges de la brèche, déployer les ballasts latéraux gonflables du véhicule amphibie, déployer les rampes d'extrémités de la travure en position horizontale dans le prolongement des deux caissons de cette dernière, piloter les suspensions hydrauliques du véhicule amphibie pour relever ses essieux, orienter les deux rampes d'une même extrémité de la travure relativement aux deux caissons pour les amener en appui sur la berge de la brèche où se trouve le véhicule à embarquer, embarquer le véhicule sur la travure de manière qu'il se trouve sensiblement au milieu de celle-ci, relever les deux rampes à leur position horizontale, déplacer le véhicule amphibie vers la berge opposée, orienter les deux rampes de l'autre extrémité de la travure relativement aux deux caissons pour les amener en appui sur la berge opposée de la brèche, débarquer le véhicule transporté sur la brèche opposée et relever les deux rampes à leur position horizontale.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un véhicule routier amphibie de l'invention portant une travure permettant le franchissement d'une brèche sèche ou d'une brèche humide ;
- la figure 2 est une vue en perspective du véhicule de la figure 1 muni de son système permettant la dépose de la travure au-dessus d'une brèche sèche ;
- la figure 3 est une vue en perspective du véhicule de la figure 1 utilisé en bac flottant pour le franchissement d'une brèche humide ;
- la figure 4 est une vue de côté représentant deux véhicules amphibies de la figure 1 dont les travures sont aboutées pour constituer un bac flottant de plus grande longueur permettant le franchissement de brèches humides correspondantes ;
- la figure 5 est une vue de dessous du véhicule amphibie de la figure 1 ;
- la figure 6 est une vue de côté du véhicule amphibie fonctionnant en bac flottant ;
- la figure 7 est une vue en perspective partielle de la travure montrant les moyens permettant le pivotement de chaque rampe d'accès relativement à la travure ;
- la figure 8 est une vue en perspective d'un ensemble à poutre de support et de lancement d'une travure et châssis de basculement de cette poutre ;
- la figure 9 est une vue en perspective représentant la travure du véhicule amphibie de la figure 1 en position déployées ;
- la figure 10 est une vue partielle en perspective des extrémités de deux rampes d'accès pouvant être accouplées de manière articulée l'une à l'autre ;
- la figure 11 est une vue de côté représentant la liaison articulée des extrémités des deux travures de la figure 10 par un ensemble de biellettes ;
- la figure 12 ést une vue en perspective agrandie de la partie arrière du véhicule amphibie de la figure 1 et montrant des moyens de reprise d'efforts et de brêlage ;
- la figure 13 est une vue en perspective agrandie des moyens de brêlage de la figure 12 ;
- les figures 14A à 14I représentent les différentes étapes permettant la dépose d'une travure au-dessus d'une brèche sèche ou humide d'une largeur inférieure à la largeur de la travure déployée ; et
- les figures 15A à 15J représentent les différentes étapes permettant le franchissement de brèches humides de très grande largeur.

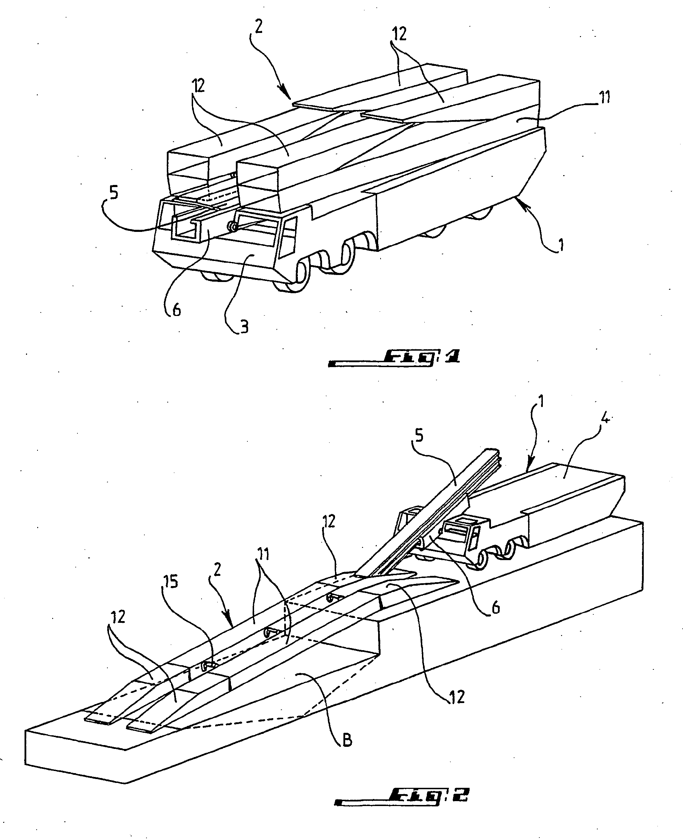

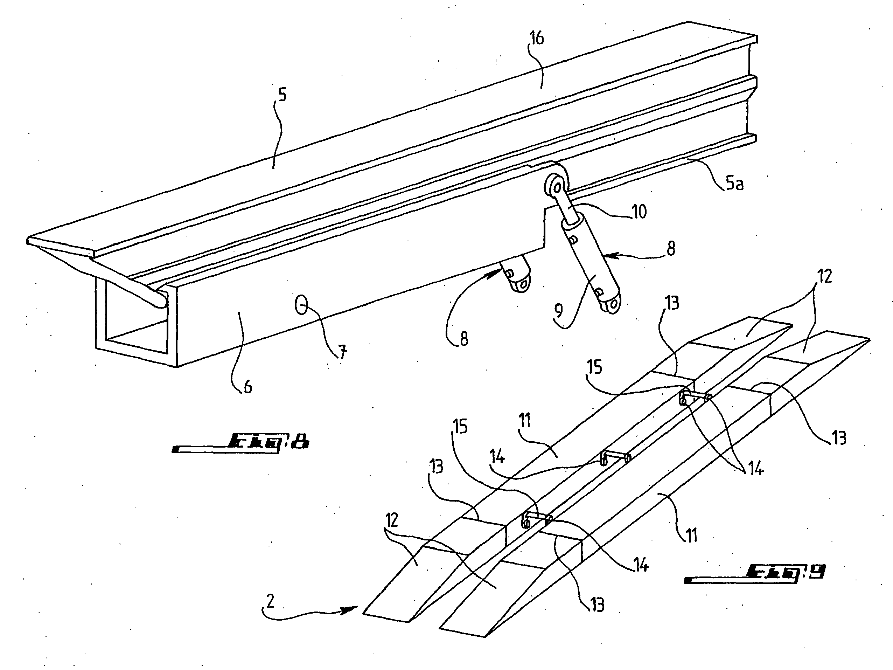

En se référant aux figures 1 à 15, la référence 1 désigne un véhicule routier, tel qu'un camion, permettant de transporter une travure 2 vers une brèche devant être franchie par des véhicules VT par exemple militaires.

Le véhicule 1 comprend une cabine blindée 3 prolongée en arrière par un châssis longitudinal 4 supportant le système de dépose de la travure 2 au-dessus d'une brèche B.

Ce système comprend une poutre de support et de lancement 5 de la travure 2 disposée en position de repos sur le châssis 4 du véhicule dans l'axe longitudinal de celui-ci et pouvant être déplacée relativement au véhicule suivant cet axe entre sa position inactive reposant sur le véhicule et une position de lancement en porte-à-faux relativement au véhicule.

La poutre 5 est constituée d'une structure résistante à section transversale en forme de I et est montée sur un châssis en forme de poutrelle 6 pouvant basculer autour d'un axe fixe horizontal 7 relativement au châssis du véhicule 1 pour permettre le basculement de la poutre à partir de sa position horizontale en porte-à-faux au véhicule vers le bas lors de la dépose de la travure 2.

Le basculement du châssis 6 autour de l'axe 7 est commandé par deux vérins hydrauliques latéraux 8, le corps 9 de chaque vérin 8 étant fixé de manière articulée au châssis du véhicule et la tige 10 de celui-ci étant reliée articulée au châssis basculant 6 en arrière de ce dernier.

La poutre 5 peut se déplacer en translation le long du châssis basculant 6 et, à cet effet, la poutre 5 peut être reliée au châssis basculant 6 par une liaison en queue d'aronde.

Bien qu'ils ne soient pas représentés, les moyens d'entraînement en translation de la poutre 5 relativement au châssis basculant 6 peuvent comprendre un moteur électrique ou hydraulique fixé sous le châssis basculant, une crémaillère fixée longitudinalement sous la poutre de lancement et un pignon moteur entraîné par l'arbre rotatif du moteur en engrènement avec la crémaillère.

La travure 2 comprend une structure courante constituée de deux caissons parallèles sensiblement parallélépipédiques jumelés 11 définissant deux voies de roulement supérieures et deux rampes d'accès 12 constituées chacune par un caisson et articulées respectivement aux deux extrémités d'un même côté des deux caissons 11 de la structure courante autour d'un axe d'articulation transversal 13. Chaque rampe 12 présente une pente qui permet à tout véhicule d'accéder aux voies de roulement des caissons 11 et de quitter celles-ci en douceur.

La travure 2 comprend en outre un jeu de galets 14 et de bras de liaison 15 des caissons 11 disposés transversalement entre les caissons 11 et qui permettent le positionnement de la travure 2 sur la poutre de lancement 5 et facilitent la translation de la travure 2 par rapport à cette poutre. Les bras de liaison 15 et les galets extrêmes 14 permettent également de reprendre et de déposer la travure 2.

Les galets 14 des bras de liaison 15 peuvent coulisser dans des rails de guidage 16 de la poutre de lancement 5 et, bien qu'ils ne soient pas représentés, les moyens d'entraînement en translation de la travure 2 sur la poutre de lancement 5 comprennent un moteur électrique ou hydraulique solidaire de la poutre 5 et une crémaillère solidaire de la travure et sur laquelle engrène un pignon moteur entraîné par l'arbre rotatif du moteur électrique ou hydraulique.

Le système de dépose d'une travure au-dessus d'une brèche et de reprise de celle-ci tel que décrit précédemment correspond au système décrit notamment dans le brevet français n° 2 666 772 au nom de la demanderesse et il suffit de se reporter à ce brevet pour en comprendre la structure et le fonctionnement dans ses détails.

Selon l'invention, le véhicule 1 est amphibie pour permettre à tout autre véhicule routier VT de franchir une brèche remplie d'eau de très grande largeur comme on le verra ultérieurement.

Le véhicule amphibie 1 a ses suspensions hydrauliques qui peuvent être pilotées, par exemple par le conducteur du véhicule, de manière à relever les essieux 17 du véhicule qui est en outre pourvu d'un dispositif de propulsion aquatique, par exemple à turbines ou pump-jets 18, connu en soi.

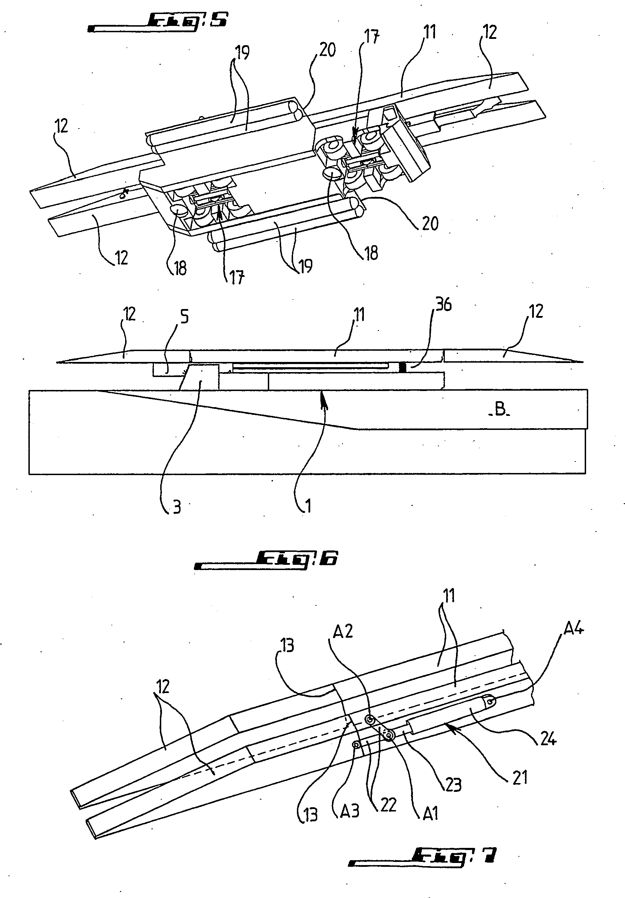

Le véhicule amphibie 1 est également pourvu d'un ou plusieurs ballasts latéraux gonflables 19, tels que boudins, augmentant la flottabilité et la stabilité du véhicule amphibie. Comme cela ressort mieux de la figure 5, deux boudins gonflables latéraux 19 sont prévus de chaque côté du véhicule en étant disposés sous une partie de châssis formant aile latérale 20 du véhicule.

Le véhicule 1 comprend en outre un dispositif de déploiement des rampes par basculement autour de leurs axes d'articulation respectifs 13 à partir de leur position de transport ou de roulage à laquelle les rampes 12 occupent une position repliée rabattue sur la structure courante à caissons 11 avec la voie de roulement de chaque rampe en appui sur la voie de roulement correspondante du caisson.

De préférence, ce dispositif de déploiement comprend un vérin commandé 21 monté dans chaque caisson 11 de la travure 2 et deux biellettes 22 ayant deux de leurs extrémités articulées ensemble en A1 à l'extrémité de la tige 23 du vérin 21 et leurs extrémités opposées articulées respectivement en A2 et A3 à la face interne de la paroi supérieure formant voie de roulement du caisson 11 et à la face interne de la paroi inférieure du caisson de la rampe 12. Le corps ou cylindre 24 dé chaque vérin 21 a sa partie d'extrémité opposée à la tige 23 reliée de façon articulée en A4 au caisson correspondant 11 de la travure 2.

Bien entendu, les quatre vérins 21 associés respectivement aux quatre rampes 12 peuvent être commandés simultanément ou séparément par paire pour permettre le pivotement de chaque rampe 12 de sa position inactive rabattue sur le caisson correspondant 11 à une position active déployée en prolongement du caisson à laquelle la rampe d'accès 12 est maintenue lorsque la travure 2 est utilisée pour franchir une brèche sèche ou à laquelle la rampe 12 peut être ajustée à une position angulaire déterminée de part et d'autre de sa position en prolongement du caisson 11 lorsque le véhicule est utilisé en bac flottant de manière à adapter la rampe 12 au profil de la berge de la brèche remplie d'eau lorsque la rampe doit être en appui sur cette berge pour le transfert de tout véhicule de la berge sur la travure 2 ou lé transfert du véhicule de la travure 2 sur la berge. Pour cela, chaque vérin 21 et ses deux biellettes 22 permet d'effectuer à chaque rampe d'accès 12 des rotations de 200° d'angle autour de l'axe de pivotement 13 de manière qu'en mode bac ou pont flottant du véhicule 1, la position angulaire des rampes 12 soit ajustable à plus ou moins 20° d'angle par rapport à la position de chaque rampe 12 en prolongement du caisson. Lorsque la travure 2 est utilisée pour le franchissement .de brèches sèches de manière à constituer un pont fixe, chaque vérin 21, une fois les rampes 12 positionnées en prolongement de leurs caissons respectifs 11, est bloqué dans cette position par des moyens de verrouillage mécanique complémentaire, connus en soi, tandis que dans le mode de fonctionnement en bac ou pont flottant de ce véhicule, chaque vérin 21 est bloqué à la position de réglage de la rampe 12 dans la gamme de plus ou moins 20° d'angle suivant le profil de la berge où la rampe est posée, en maintenant tout simplement la pression de fluide de commande dans ce vérin.

Les vérins logés dans la structure courante de la travure 2 sont alimentés hydrauliquement par une connexion automatique réalisée sous cette structure courante.

La travure 2 du véhicule 1 fonctionnant en bac flottant peut être amoviblement reliée bout à bout par des moyens de liaison à une autre travure identique d'un autre véhicule fonctionnant également en bac flottant de manière à constituer un pont flottant de plus grande longueur.

De préférence, ces moyens de liaison permettent de relier bout à bout les extrémités des deux rampes d'accès 12 déployées d'une même extrémité de la travure 2 du véhicule amphibie respectivement aux extrémités des deux rampes d'accès 12 déployées d'une même extrémité de la travure 2 de l'autre véhicule amphibie 1.

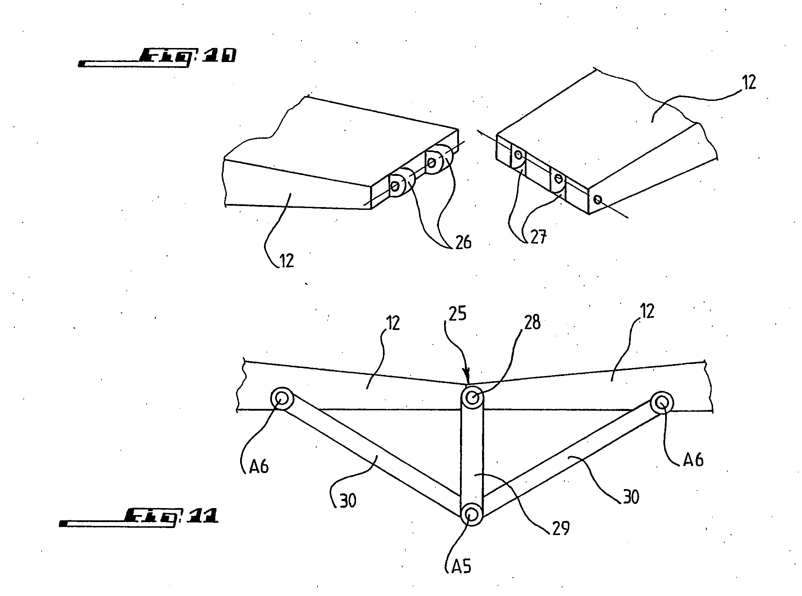

A cet effet, ces moyens de liaison comprennent, comme cela ressort mieux des figures 10 et 11, une charnière d'articulation 25 dont les charnons 26 de l'extrémité de l'une des rampes d'accès 12 du véhicule 1 s'engagent respectivement dans des évidements conjugués 27 de l'extrémité de l'autre rampe d'accès opposée 12 de l'autre véhicule. Ces moyens comprennent en outre une broche 28 passant au travers des charnons 26 et des évidements 27 pour assembler l'une à l'autre les extrémités des deux rampes en vis-à-vis 12 de la travure 2 et des jeux de biellettes disposés de chaque côté des rampes mises bout à bout et permettant de reprendre les moments de flexion. Chaque jeu de biellettes comprend une biellette centrale 29 reliée à une extrémité correspondante de la broche 28 en s'étendant en dessous des rampes 12 et sensiblement perpendiculairement à celles-ci lorsqu'elles sont en prolongement l'une de l'autre et deux biellettes latérales 30 reliées d'une part en A5 à l'extrémité de la biellette centrale 29 à l'opposé de la broche 28 et d'autre part respectivement aux côtés correspondants des deux rampes 12 en A6. Les broches 28 et les biellettes 29, 30 sont mises en place et verrouillées manuellement et la liaison est symétrique pour permettre le verrouillage bout à bout de deux travures quelle que soit l'extrémité présentée du bac ou pont flottant.

En variante, les moyens de liaison peuvent relier bout à bout les extrémités des deux rampes d'accès d'une même extrémité de la travure du véhicule amphibie occupant leur position rabattue sur la travure 2 respectivement aux extrémités des deux rampes d'accès 12 d'une même extrémité de la travure 2 de l'autre véhicule amphibie occupant également leur position rabattue sur cette travure. De tels moyens de liaison sont décrits dans le brevet français n° 2 666 772 au nom de la demanderesse.

Selon une autre variante, les moyens de liaison permettent de relier par recouvrement les extrémités des deux rampes d'accès 12 déployées d'une même extrémité de la travure 2 du véhicule amphibie aux extrémités des deux rampes d'accès 12 déployées d'une même extrémité de la travure 2 de l'autre véhicule amphibie comme décrit dans le brevet français 2 683 837 au nom de la demanderesse.

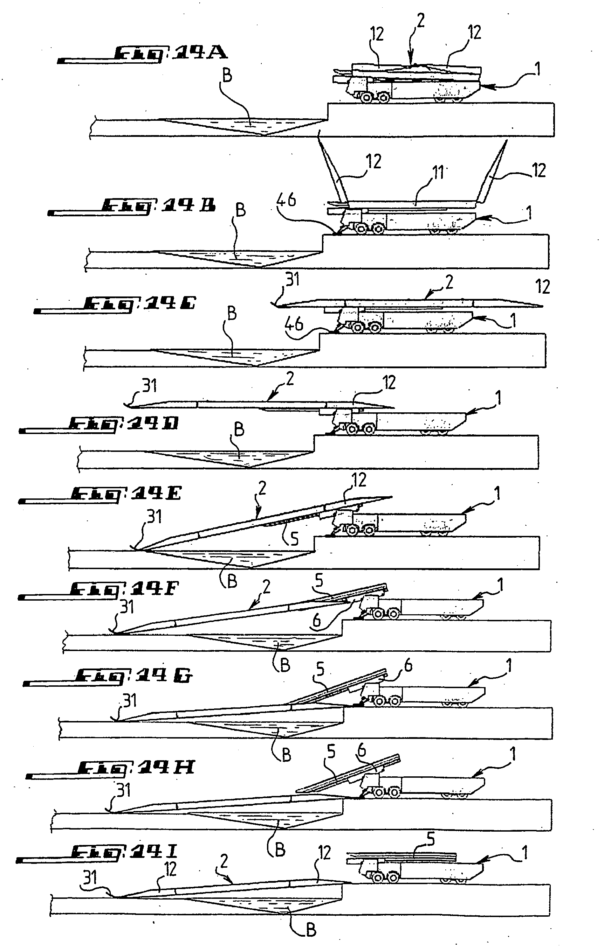

Avantageusement, les deux rampes 12 d'une même extrémité de la travure 2 sont pourvues d'une plaque 31, visible aux figures 14B à 14I, disposée entre les deux rampes 12 et dont l'extrémité libre est relevée à la manière d'un ski. Ces plaques en ski 31 permettent de faciliter la translation de la travure 2 en particulier sur une berge opposée en contrebas relativement au véhicule lors de la dépose de la travure au-dessus de brèches sèche et permettent de reposer la travure sur les deux parties renforcées des extrémités des rampes d'accès 12. Ces plaques en ski peuvent être amoviblement fixées aux rampes 12 juste avant la pose de la travure au-dessus de la brèche sèche et, en tout cas, elles sont agencées pour ne pas perturber la montée de tout véhicule sur la travure en mode de pont posé au-dessus de la brèche sèche.

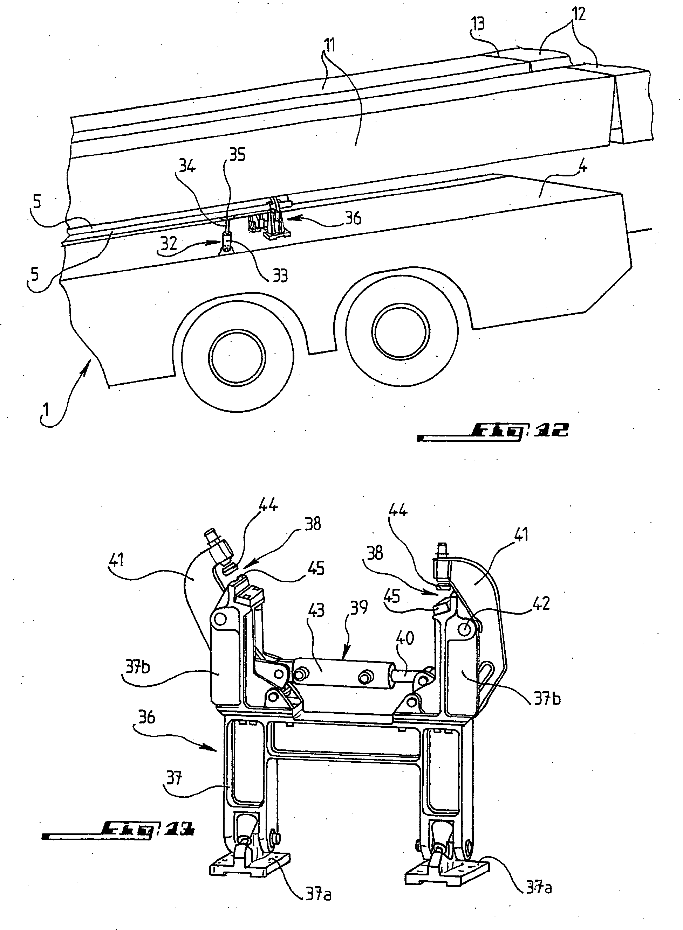

Le véhicule 1 est également pourvu d'un vérin 32 visible en figure 12 situé à l'arrière du véhicule en dessous de la poutre 5 et permettant la reprise d'efforts, c'est-à-dire de répartir les charges entre l'avant et l'arrière du véhicule, charges liées à l'ensemble comprenant la poutre de lancement 5, la travure 2 et le véhicule VT transporté sur la travure 2 lorsque le véhicule fonctionne en mode bac ou pont flottant. A cet effet, le corps 33 du vérin 32 est fixé au châssis 4 du véhicule en s'étendant sensiblement perpendiculairement au châssis et la tige 34 du vérin 32 est en appui glissant, par une plaque 35 formant patin solidaire de l'extrémité de la tige 34, sous la poutre 5. En outre, le vérin 32 peut être commandé pour faire basculer la poutre 5 autour de l'axe de pivotement 7 du châssis basculant 6 vers le bas pour également amener l'extrémité des rampes d'accès 12 en appui sur le bord correspondant de la brèche à franchir, en complément du réglage de la position angulaire relative des rampes 12 relativement aux caissons 11 par les ensembles à vérins 21 et biellettes 22 en mode bac ou pont flottant du véhicule 1. Cela facilite ainsi l'accès par l'arrière du véhicule amphibie en mode bac ou pont flottant en inclinant la travure 2 vers le bas en action simultanée avec le châssis basculant 6.

Le véhicule 1 peut être également équipé de moyens 36 de brêlage de la poutre 5 au châssis 4 du véhicule et mieux visible en figure 13.

Ces moyens de brêlage comprennent un cadre rigide 37 généralement en forme de H dont les pieds inférieurs 37a sont solidaires du châssis 4 et deux mâchoires 38 montées articulées aux parties d'extrémités supérieures des deux bras supérieurs 37b du cadre en H 37 et pouvant être commandées par un vérin 39 disposé sensiblement transversalement au-dessus de la branche transversale du cadre en H 37, de manière que chaque mâchoire 38 puisse être fermée pour enserrer une partie inférieure correspondante de la poutre 5 pouvant être constituée par un rebord inférieur longitudinal 5a de la poutre 5.

Le vérin 39 a sa tige 40 reliée articulée à l'extrémité inférieure d'un levier 41 monté pivotant à l'un des bras 37b du cadre 37 autour d'un axe horizontal 42 et son corps 43 relié de façon articulée à l'extrémité inférieure d'un second levier 41 monté pivotant à l'autres bras opposé 37b du cadre 37 autour d'un axe 42. L'extrémité supérieure de chaque levier 41 est recourbée et est munie d'un mors 44 pouvant venir en regard d'un mors fixe 45 solidaire de l'extrémité supérieure du bras correspondant 37b du cadre 37 pour bloquer à la manière d'un étau la partie de rebord correspondante 5a de la poutre 5 qui est donc maintenue rigidement au châssis 4 du véhicule en mode de transport.

Le véhicule 1 comprend en avant de celui-ci un pied de stabilisation 46 occupant une position rangée inactive sous le véhicule et pouvant être déployé à sa position active de stabilisation en appui sur le sol lors dé la dépose de la travure 2 au-dessus d'une brèche sèche, pendant laquelle dépose le véhicule 1 repose sur ses essieux.

Les dimensions et la masse du véhicule 1 équipé de sa travure et du système de dépose de celle-ci sont telles que cet ensemble peut être aérotransportable par tout avion permettant d'accueillir le véhicule 1.

Bien entendu, le véhicule 1 et son équipement peut lui-même passer sur une travure formant pont fixe disposé au-dessus d'une brèche sèche ou être transporté par un autre véhicule similaire utilisé en mode bac ou pont flottant.

Les figures 14A à 14I montrent les différentes étapes permettant de déposer la travure 2 au-dessus d'une brèche sèche ou d'une brèche humide mais dont la largueur est quelque peu inférieure à la longueur de la travure destinée à constituer un pont fixe de franchissement de la brèche B, dont le bord ou berge opposé à celui où se trouve le véhicule 1 est dans le cas présent en contrebas, étant bien entendu qu'il peut être au même niveau ou à un niveau supérieur.

La séquence de lancement et de dépose de la travure 2 s'opèrent comme suit.

Tout d'abord, le véhicule 1 équipé de sa travure 2 se positionne sur la berge de lancement (figure 14A).

Ensuite, le pied de stabilisation 46 est déployé pour reposer sur le sol à proximité de la berge de la brèche B, les rampes 12 sont déployées à partir de leur position rabattue sur leurs caissons respectifs 11 (figure 14B) et sont verrouillées en position horizontale dans le prolongement de la structure courante constituée par les caissons 11 (figure 14C).

La travure 2 est ensuite déplacée en translation d'une part par la poutre 5 se déplaçant relativement au véhicule 1 et d'autre part par les moyens d'entraînement de la travure 2 relativement à la poutre 5 à la position représentée en figure 14D. Le châssis basculant 6 est commandé pour faire basculer la poutre 5 et la travure 4 de manière à déposer l'extrémité de la rampe 12 sur la berge opposée en contrebas (figure 14E), la translation de la travure 2 étant facilitée par l'emploi de la plaque en forme de ski 31.

La travure 2 est ensuite déplacée vers l'avant du véhicule relativement à la poutre 5 pour accrocher le bras de liaison arrière 15 à l'extrémité de la poutre 5 (figure 14F).

Le châssis basculant 6 est commandé pour pivoter à nouveau autour de son axe 17 et déposer l'extrémité des rampes 12 sur la berge située du côté du véhicule 1 (figure 14G).

La poutre de lancement 5 est ensuite dégagée par rotation du châssis basculant 6 en sens inverse autour de l'axe 7 et recul de la poutre 5 (figure 14H).

Enfin, le pied de stabilisation 46 est rétracté dans l'avant du véhicule 1 et l'ensemble à poutre 5 et châssis basculant 6 est ramené à sa position de transport sur le châssis du véhicule (figure 14I).

Ainsi, les véhicules peuvent circuler sur la travure 2 pour franchir la brèche B et le véhicule 1 franchit enfin lui-même la brèche pour reprendre la travure 2 sur la berge opposée.

Ces différentes étapes de pose et de reprise de la travure 2 sont déjà décrites en détail dans l'art antérieur constitué par exemple par le brevet français n° 2 666 772 et le brevet français n° 2 683 837 au nom de la demanderesse.

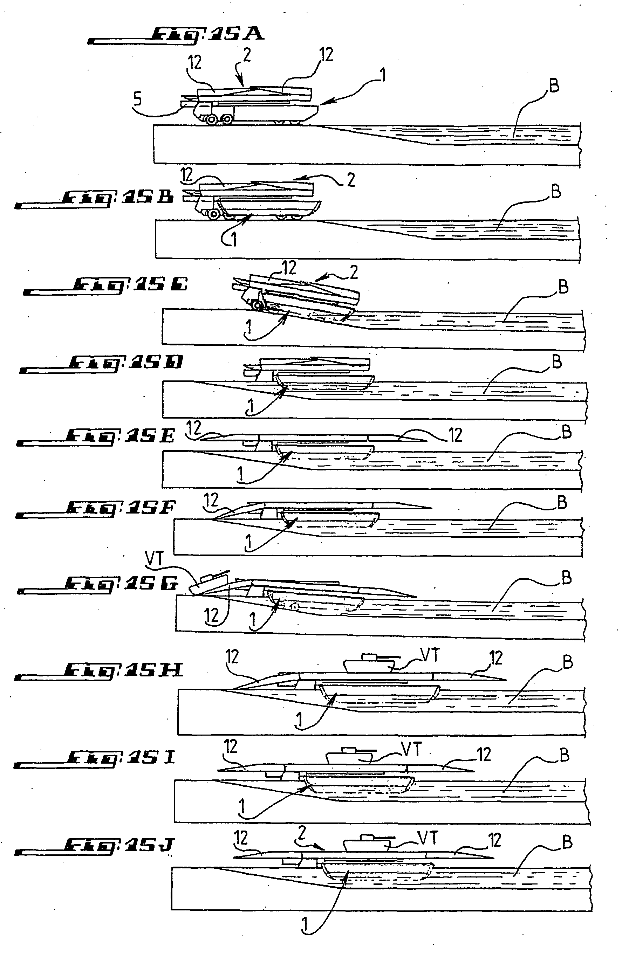

Les figures 15A à 15J illustrent les différentes étapes permettant à des véhicules VT de franchir une brèche B remplie d'eau d'une berge à l'autre et ayant une largeur supérieure à la longueur de la travure 2 occupant sa position déployée.

Comme représenté en figure 15A, le véhicule 1 s'approche, en marche arrière, de la berge de la brèche B, mais le véhicule peut s'approcher indifféremment de ces deux berges en marche avant.

Les ballasts latéraux gonflables 19 sont commandés pour qu'ils soient gonflés et assurent un complément de flottabilité et de stabilité du véhicule amphibie dans l'eau (figure 15B).

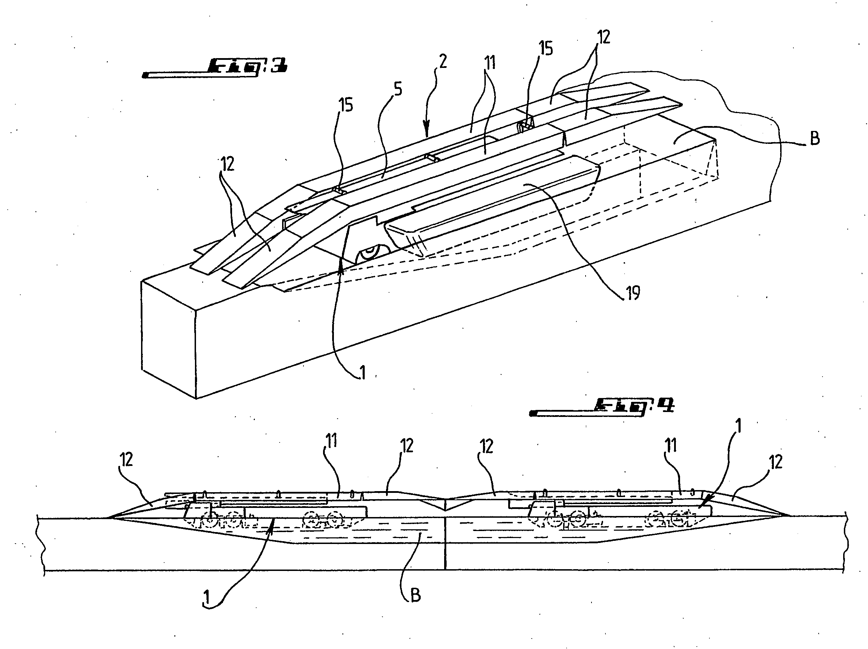

Les figures 15C et 15D montrent que le véhicule amphibie constituant un pont flottant est entré dans l'eau de la brèche B. Il est à noter que les personnes opérant à partir de ce stade sont au nombre de deux et sortent de la cabine blindée du véhicule 1, par exemple par des trappes sur le toit de la cabine, et montent sur les passages piéton aménagés en partie supérieure des ballasts comme cela ressort mieux de la figure 3. Ces personnes dirigent alors les actions suivants à l'aide d'un boîtier de commande extérieur.

Ainsi, comme le montre la figure 15E, les rampes d'accès 12 sont déployées de manière à être disposées à l'horizontale dans le prolongement de la structure courante constituée par les caissons 11.

Les essieux du véhicule flottant 1 sont relevés par pilotage de ses suspensions hydrauliques et les rampes d'accès 12 situées du côté de la berge où se trouvait le véhicule 1 sont orientées angulairement relativement aux caissons 11 autour de leurs axes d'articulation respectifs 13 de manière à venir en appui sur cette berge située en contrebas par rapport à la rampe 12 (figure 15F).

Le véhicule à transporter VT peut alors embarquer sur le véhicule flottant 1 en circulant tout d'abord sur les rampes d'accès 12 puis sur la structure courante jusqu'à venir approximativement au milieu de cette dernière (figures 15G et 15H). A ce stade, les rampes articulées 12 sont bloquées en position et l'ensemble pivote autour de l'appui d'extrémité de ces rampes sur la berge, tout en respectant un franc bord réglementaire grâce au complément de flottabilité procuré par les ballasts gonflables 19. La longueur des rampes permet d'avoir un niveau d'eau suffisant, sans risque d'échouage, même une fois le véhicule VT embarqué.

Une fois le véhicule VT embarqué au milieu du pont flottant, la rampe d'embarquement 12 est relevée à sa position horizontale (figure 15I) et le véhicule amphibie 1 traverse la brèche B (figure 15J) pour déposer les rampes opposées 12 de la traverse 2 vers la berge opposée et permettre le débarquement du véhicule transporté VT en orientant les rampes correspondants 12 pour qu'elles viennent en appui sur la berge et qui sont ramenées à leur position horizontale une fois le véhicule VT débarqué.

Au besoin, deux véhicules amphibies similaires 1 peuvent être utilisés pour assurer la mise en bout à bout de deux travures 2 et constituer ainsi un pont flottant d'une longueur suffisante pour recouvrir toute la largeur de la brèche remplie d'eau comme représenté en figure 4.

Bien entendu, il est possible d'assembler autant de véhicules amphibies que nécessaire pour couvrir toute la largeur de la brèche humide B.

## Revendications

1. Système de transport par un véhicule routier (1) d'au moins une travure (2) et de dépose à partir du véhicule de la travure (2) au-dessus d'une brèche sèche (B) pour permettre à tout véhicule routier (VT) de franchir la brèche (B), le système comportant ledit véhicule routier (1) et ladite travure (2), **caractérisé en ce que** le véhicule (1) de transport de la travure (2) est amphibie pour permettre à tout véhicule routier (VT) de franchir une brèche remplie d'eau en transférant et transportant ce véhicule sur la travure (2) reposant sur le véhicule amphibie (1) fonctionnant en bac flottant.

2. Système selon la revendication 1, **caractérisé en ce que** le véhicule amphibie (1) est pourvu d'un ou plusieurs ballasts latéraux gonflables (19), tels que boudins, augmentant la flottabilité et la stabilité du véhicule amphibie (1).

3. Système selon la revendication 1 ou 2, **caractérisé en ce que** les suspensions notamment hydrauliques du véhicule amphibie (1) peuvent être pilotées pour relever les essieux (17) du véhicule et **en ce que** le véhicule (1) comprend un dispositif à turbines (18) de propulsion aquatique de ce véhicule.

4. Système selon l'une des revendications précédentes, **caractérisé en ce que** la travure (2) s'étend longitudinalement au véhicule de transport (1) et comprend deux caissons parallèles sensiblement parallélépipédiques jumelés (11) définissant deux voies de roulement supérieures et deux rampes (12) d'accès aux voies de roulement articulées respectivement aux deux extrémités des caissons (11) autour d'un axe transversal (13) et des moyens (21,22) sont prévus pour permettre le pivotement de chaque rampe (12) d'une position inactive rabattue sur le caisson correspondant (11) à une position active déployée en prolongement du caisson (11) à laquelle la rampe d'accès (12) est maintenue lorsque la travure (2) est utilisée pour franchir une brèche sèche ou à laquelle la rampe d'accès (12) peut être ajustée à une position angulaire déterminée de part et d'autre de sa position en prolongement du caisson (11) lorsque le véhicule (1) est utilisé en bac flottant de manière à adapter la rampe (12) au profil de la berge de la brèche remplie d'eau lorsque la rampe (12) doit être en appui sur cette berge pour le transfert de tout véhicule de la berge sur la travure (2) ou le transfert du véhicule de la travure (2) sur la berge.

5. Système selon la revendication 4, **caractérisé en ce que** les moyens de pivotement de chaque rampe d'accès comprennent un vérin commandé (21) monté dans le caisson correspondant (11) de la travure (2) et deux biellettes (22) ayant deux de leurs extrémités articulées ensemble à l'extrémité de la tige (23) du vérin (21) et leurs extrémités opposées articulées respectivement à la face interne de la paroi supérieure de roulement du caisson parallélépipédique (11) et à la face interne de la paroi inférieure du caisson de la rampe (12).

6. Système selon la revendication 4 ou 5, **caractérisé en ce que** la travure (2) du véhicule (1) fonctionnant en bac flottant peut être amoviblement reliée bout à bout par des moyens de liaison à une autre travure identique (2) d'un autre véhicule (1) fonctionnant en bac flottant pour constituer un pont flottant de plus grande longueur.

7. Système selon la revendication 6, **caractérisé en ce que** les moyens de liaison permettent de relier bout à bout les extrémités des deux rampes d'accès déployées (12) d'une même extrémité de la travure (2) du véhicule amphibie (1) respectivement aux extrémités des deux rampes d'accès déployées (12) d'une même extrémité de la travure (2) de l'autre véhicule amphibie (1).

8. Système selon la revendication 7, **caractérisé en ce que** les moyens de liaison comprennent une charnière d'articulation (25) dont les charnons (26) des extrémités de l'une des rampes d'accès (12) s'engageant respectivement dans des évidements conjugués (27) de l'extrémité de l'autre rampe d'accès opposée (12), une broche (28) passant au travers des évidements (27) et des charnons (26) pour assembler les unes aux autres les extrémités des rampes (12), et des jeux de biellettes (29,30) disposés de chaque côté des rampes mises bout à bout (12), comprenant une biellette centrale (29) reliée à une extrémité correspondante de la broche (28) en s'étendant en dessous des rampes (12) et deux biellettes latérales (30) reliées d'une part à l'extrémité de la biellette centrale (29) à l'opposé de la broche (28) et d'autre part respectivement aux côtés correspondants des rampes (12).

9. Système selon la revendication 6, **caractérisé en ce que** les moyens de liaison permettent de relier bout à bout les extrémités des deux rampes d'accès (12) d'une même extrémité de la travure (2) du véhicule amphibie (1) et occupant leur position rabattue sur la travure (2) respectivement aux extrémités des deux rampes d'accès (12) d'une même extrémité de la travure (2) de l'autre véhicule amphibie (1) et occupant également leur position rabattue sur cette travure.

10. Système selon la revendication 6, **caractérisé en ce que** les moyens de liaison permettent de relier par recouvrement les extrémités des deux rampes d'accès déployées (12) d'une même extrémité de la travure (2) du véhicule amphibie (1) aux extrémités des deux rampes d'accès déployées (12) d'une même extrémité de la travure (2) de l'autre véhicule amphibie (1).

11. Système selon l'une des revendications 4 à 10, **caractérisé en ce que** les deux rampes (12) d'une même extrémité de la travure (2) sont pourvues d'une plaque (31) disposée entre les deux rampes (12) et dont l'extrémité libre est relevée à la manière d'un ski.

12. Système selon l'une des revendications 4 à 11, **caractérisé en ce qu'**il comprend, pour la dépose de la travure au-dessus d'une brèche sèche, une poutre de support et de lancement (5) de la travure (2) disposée approximativement dans l'axe longitudinal du véhicule (1), déplaçable relativement au véhicule suivant cet axe entre une position inactive reposant sur le véhicule (1) et une position de lancement en porte-à-faux relativement au véhicule à laquelle la travure (2) est entraînée en translation guidée sur la poutre de lancement (5) également à une position en porte-à-faux relativement à la poutre de lancement (5) et **en ce que** la poutre de lancement (5) est supportée par un châssis orientable (6) en pouvant translater de façon guidée sur celui-ci, le châssis basculant (6) autour d'un axe fixe horizontal (7) pour permettre à la poutre (5) de pivoter jusqu'à ce que la travure (2) vienne en appui d'abord par son extrémité en porte-à-faux sur le bord de la brèche opposé à celui situé du côté du véhicule (1), puis par son extrémité opposée sur le bord de brèche côté véhicule, la poutre de lancement (5) étant ensuite désengagée de la travure (2) qui est déposée sur la brèche.

13. Système selon la revendication 12, **caractérisé en ce qu'**il comprend au moins un vérin (32) de reprise d'efforts situé à l'arrière du véhicule (1) en dessous de la poutre (5) et dont le corps (33) est fixé au châssis (4) du véhicule (1) et la tige (34) est en appui glissant sous la poutre (5), le vérin (32) pouvant être commandé pour faire basculer la poutre (5) autour de l'axe de pivotement (7) du châssis basculant (6) vers le bas pour également amener l'extrémité de la travure (2) en appui sur le bord correspondant de la brèche à franchir (B).

14. Système selon la revendication 12 ou 13, **caractérisé en ce qu'**il comprend en outre des moyens de brêlage (36) de la poutre (5) au châssis (4) du véhicule (1) et comprenant un cadre rigide (37) solidaire perpendiculairement du châssis (4) et deux mâchoires (38) montées articulées au cadre (37) et commandées par un vérin (39) monté sur le cadre (37) de manière que chaque mâchoire (38) puisse enserrer une partie inférieure correspondante (5a) de la poutre (5).

15. Système selon l'une des revendications précédentes, **caractérisé en ce qu'**il est aérotransportable par avion.

16. Système selon l'une des revendications précédentes, **caractérisé en ce que** le véhicule (1) comprend en avant de celui-ci un pied de stabilisation (46) pouvant venir en appui au sol lors de la dépose de la travure (2) au-dessus de la brèche sèche et pendant laquelle le véhicule (1) repose sur ses essieux (17).

17. Procédé de transfert et de transport d'un véhicule (VT) sur une travure (2) portée par un véhicule amphibie (1) pour le franchissement d'une brèche remplie d'eau et utilisant le système de l'une quelconque des revendications 1 à 16, **caractérisé en ce qu'**il consiste à rapprocher le véhicule amphibie (1) de l'une des berges de la brèche (B), déployer les ballasts latéraux gonflables (19) du véhicule amphibie (1), déployer les rampes (12) d'un même côté de la travure (2) en position horizontale dans le prolongement des deux caissons (11) de cette dernière, piloter les suspensions hydrauliques du véhicule amphibie pour relever ses essieux (17), orienter les deux rampes (12) d'une même extrémité de la travure (2) relativement aux deux caissons (11) pour les amener en appui sur la berge de la brèche (B) où se trouve le véhicule à embarquer, embarquer le véhicule (VT) sur la travure (2) de manière qu'il se trouve sensiblement au milieu de celle-ci, relever les deux rampes (12) à leur position horizontale, déplacer le véhicule amphibie (1) vers la berge opposée, orienter les deux rampes (12) de l'autre extrémité de la travure (2) relativement aux deux caissons (11) pour les amener en appui sur la berge opposée de la brèche, débarquer le véhicule transporté (VT) sur la berge opposée et relever les deux rampes (12) à leur position horizontale.

## Claims

1. A system for transporting via a road vehicle (1) at least one span (2) and for putting the span (2) down from the vehicle over a dry gap (B) in order to enable any road vehicle (VT) to cross the gap (B), the system comprising said road vehicle (1) and said span (2), **characterized in that** the vehicle (1) for transporting the span (2) is amphibious in order to enable any road vehicle (VT) to cross a water-filled gap by transferring and transporting this vehicle on the span (2) lying on the amphibious vehicle (1) acting as a floating bridge.

2. The system according to claim 1, **characterized in that** the amphibious vehicle (1) is provided with one or more inflatable side ballasts (19), such as fenders, increasing floatability and stability of the amphibious vehicle (1).

3. The system according to claim 1 or 2, **characterized in that** the suspensions, in particular hydraulic ones, of the amphibious vehicle (1) can be driven in order to raise the axles (17) of the vehicle, and **in that** the vehicle (1) comprises a water-propelling turbine device (18) of this vehicle.

4. The system according to any of the preceding claims, **characterized in that** the span (2) extends longitudinally with respect to the transport vehicle (1) and comprises two substantially parallelepipedic parallel box-type twin-structures (11) defining two upper runways and two ramps (12) giving access to the runways respectively hinged at the two ends of the box-type structures (11) around a transverse axis (13), and means (21, 22) are provided for allowing each ramp (12) to pivot from an inactive folded up position on the corresponding box-type structure (11) to an active unfolded position extending the box-type structure (11), in which the access ramp (12) is maintained when the span (2) is used for crossing a dry gap or in which the access ramp (12) can be adjusted to an angular position determined on either side of the position thereof extending the box-type structure (11) when the vehicle (1) is used as a floating bridge so as to adapt the ramp (12) to the profile of the bank of the water-filled gap when the ramp (12) is to rest on this bank for transferring any vehicle from the bank onto the span (2) or transferring the vehicle from the span (2) onto the bank.

5. The system according to claim 4, **characterized in that** the means for pivoting each access ramp comprise a controlled cylinder (21) mounted in the corresponding box-type structure (11) of the span (2) and two links (22) having two of the ends thereof hinged together at the end of the rod (23) of the cylinder (21), and the opposite ends thereof hinged respectively to the internal side of the upper runway wall of the parallelepipedic box-type structure (11) and to the internal side of the lower wall of the box-type structure of the ramp (12).

6. The system according to claim 4 or 5, **characterized in that** the span (2) of the vehicle (1) acting as a floating bridge can be linked removably end to end by linking means to another identical span (2) of another vehicle (1) acting as a floating bridge for building a longer floating bridge.

7. The system according to claim 6, **characterized in that** the linking means allow for end to end linking of the ends of the two unfolded access ramps (12) of the same end of the span (2) of the amphibious vehicle (1) respectively to the ends of the two unfolded access ramps (12) of the same end of the span (2) of the other amphibious vehicle (1).

8. The system according to claim 7, **characterized in that** the linking means comprise an articulated hinge (25) the knuckles (26) of which, of the ends of each of the access ramps (12), respectively engage in associated cutouts (27) of the end of the other opposite access ramp (12), with a pin (28) going through the cutouts (27) and the knuckles (26) for assembling together the ends of the ramps (12), and link sets (29, 30) disposed on either side of the ramps (12) placed end to end, comprising one center link (29) linked to a corresponding end of the pin (28) by extending under the ramps (12) and two side links (30) linked on the one hand to the end of the center link (29) opposite of the link (28) and on the other hand respectively to the corresponding sides of the ramps (12).

9. The system according to claim 6, **characterized in that** the linking means allow for end to end linking of the ends of both access ramps (12) of one same end of the span (2) of the amphibious vehicle (1) and occupying their folded-back position on the span (2) respectively with the ends of both access ramps (12) of one same end of the span (2) of the other amphibious vehicle (1) and also occupying their folded-back position on this span.

10. The system according to claim 6, **characterized in that** the linking means allow for the ends of both unfolded access ramps (12) of one same end of the span (2) of the amphibious vehicle (1) to be linked by overlapping with the ends of both unfolded access ramps (12) of one same end of the span (2) of the other amphibious vehicle (1).

11. The system according to any of claims 4 to 10, **characterized in that** both ramps (12) of one same end of the span (2) are provided with a plate (31) disposed between both ramps (12) and the free end of which is raised like a skid.

12. The system according to any of claims 4 to 11, **characterized in that** it comprises for putting the span down over a dry gap, a beam (5) for supporting and launching the span (2) disposed approximately in the longitudinal axis of the vehicle (1), movable with respect to the vehicle following this axis between an inactive position resting on the vehicle (1) and a launching position cantilevered with respect to the vehicle, in which the span (2) is driven in a traveling motion guided on the launching beam (5) also in a cantilevered position with respect to the launching beam (5), and **in that** the launching beam (5) is supported by a swiveling frame (6) by being capable of traveling in a guided way thereon, the frame (6) tilting about a horizontal fixed axis (7) in order to enable pivoting of the beam (5) until the span (2) comes to rest first with the cantilevered end thereof on the edge of the gap opposite the one located at the vehicle side (1), then with the end thereof opposite the vehicle-side gap edge, with the launching beam (5) then being released from the span (2) which has been put down on the gap.

13. The system according to claim 12, **characterized in that** it comprises at least one force recovery cylinder (32) located at the back of the vehicle (1) under the beam (5) and the body (33) of which is fastened to the frame (4) of the vehicle (1), and the rod (34) is slidingly resting under the beam (5), the cylinder (32) being capable of being controlled in order to make the beam (5) tilt about the pivoting axis (7) of the frame (6) tilting downwards for also bringing the end of the span (2) to rest on the corresponding edge of the gap (B) to be crossed.

14. The system according to claim 12 or 13, **characterized in that** it further comprises means (36) for lashing the beam (5) to the frame (4) of the vehicle (1) and comprising a rigid structure (37) perpendicularly integral with the frame (4) and two jaws (38) hingedly mounted to the frame (37) and controlled by a cylinder (39) mounted to the frame (37) so that each jaw (38) can enclose a corresponding lower part (5a) of the beam (5).

15. The system according to any of the preceding claims, **characterized in that** it can be airborne by plane.

16. The system according to any of the preceding claims, **characterized in that** the vehicle (1) comprises in front of it a stabilizing stand (46) capable of resting on the ground when the span (2) is put down over the dry gap and while the vehicle (1) is resting on the axles (17) thereof.

17. A method for transferring and transporting a vehicle (VT) on a span (2) carried by an amphibious vehicle (1) for crossing a water-filled gap and using the system according to any of claims 1 to 16, **characterized in that** it comprises approaching the amphibious vehicle (1) of one of the banks of the gap (B), unfolding the inflatable side ballasts (19) of the amphibious vehicle (1), unfolding the ramps (12) on the same side of the span (2) in a horizontal position in the extension of the two box-type structures (11) of the latter, driving the hydraulic suspensions of the amphibious vehicle in order to raise the axles (17) thereof, swiveling both ramps (12) of one same end of the span (2) with respect to the two box-type structures (11) for bringing them to rest on the bank of the gap (B) where the vehicle to embark is located, loading the vehicle (VT) on the span (2) so that it is located substantially in the middle thereof, raising both ramps (12) to their horizontal position, moving the amphibious vehicle (1) to the opposite bank, swiveling both ramps (12) of the other end of the span (2) with respect to the two box-type structures (11) in order to bring them to rest on the opposite bank of the gap, unloading the transported vehicle (VT) on the opposite bank and raising both ramps (12) to their horizontal position.

## Patentansprüche

1. System zum Transportieren durch ein Straßenfahrzeug (1) mindestens eines Fahrwegs (2) und zum Absetzen des Fahrwegs (2) von dem Fahrzeug über eine trockene Kluft (B), um es einem beliebigen Straßenfahrzeug (VT) zu ermöglichen, die Kluft (B) zu überqueren, wobei das System das Straßenfahrzeug (1) und den Fahrweg (2) umfasst, **dadurch gekennzeichnet, dass** das Fahrzeug (1) zum Transportieren des Fahrwegs (2) amphibisch ist, um es einem beliebigen Straßenfahrzeug (VT) zu ermöglichen, eine mit Wasser gefüllte Kluft zu überqueren, indem dieses Fahrzeug auf dem Fahrweg (2), der auf dem Amphibienfahrzeug (1) liegt, das als schwimmende Brücke dient, übertragen und transportiert wird.

2. System nach Anspruch 1, **dadurch gekennzeichnet, dass** das Amphibienfahrzeug (1) mit einem oder mehreren aufblasbaren Seitenballasten (19) versehen ist, wie etwa Fender, welche die Schwimmfähigkeit und Stabilität des Amphibienfahrzeugs (1) steigern.

3. System nach Anspruch 1 oder 2, **dadurch gekennzeichnet, dass** die insbesondere hydraulischen Radaufhängungen des Amphibienfahrzeugs (1) angesteuert werden können, um die Radachsen (17) des Fahrzeugs anzuheben, und dass das Fahrzeug (1) eine Wasserantrieb-Turbinenvorrichtung (18) dieses Fahrzeugs umfasst.

4. System nach einem der vorhergehenden Ansprüche, **dadurch gekennzeichnet, dass** der Fahrweg (2) sich im Verhältnis zum Transportfahrzeug (1) längs erstreckt und zwei im Wesentlichen quaderförmige parallele doppelte Senkkästen (11) umfasst, die zwei obere Fahrbahnen und zwei Rampen (12) zum Zugang zu den Fahrbahnen definieren, die jeweils an den beiden Enden der Senkkästen (11) um eine Querachse (13) gelenkig angebracht sind, und Mittel (21, 22) vorgesehen sind, damit jede Rampe (12) von einer inaktiven eingeklappten Position auf dem entsprechenden Senkkasten (11) in eine aktive ausgeklappte Position in der Verlängerung des Senkkastens (11) verschwenken kann, in der die Zugangsrampe (12) gehalten wird, wenn der Fahrweg (2) verwendet wird, um eine trockene Kluft zu überqueren, oder in der die Zugangsrampe (12) einer bestimmten Winkelposition angepasst werden kann, die auf beiden Seiten ihrer Position in der Verlängerung des Senkkastens (11) bestimmt wird, wenn das Fahrzeug (1) als schwimmende Brücke verwendet wird, um die Rampe (12) dem Profil des Ufers der mit Wasser gefüllten Kluft anzupassen, wenn die Rampe (12) an diesem Ufer aufliegen soll, um ein beliebiges Fahrzeug vom Ufer auf den Fahrweg (2) zu übertragen oder das Fahrzeug vom Fahrweg (2) auf das Ufer zu übertragen.

5. System nach Anspruch 4, **dadurch gekennzeichnet, dass** die Mittel zum Verschwenken jeder Zugangsrampe einen gesteuerten Zylinder (21), der in dem entsprechenden Senkkasten (11) des Fahrwegs (2) angebracht ist, und zwei Schwingarme (22), von denen jeweils zwei Enden zusammen am Ende der Stange (23) des Zylinders (21) angelenkt sind, und deren gegenüberliegenden Enden jeweils an der Innenseite der oberen Fahrwand des quaderförmigen Senkkastens (11) und an der Innenseite der unteren Wand des Senkkastens der Rampe (12) angelenkt sind, umfasst.

6. System nach Anspruch 4 oder 5, **dadurch gekennzeichnet, dass** der Fahrweg (2) des Fahrzeugs (1), das als schwimmende Brücke dient, über Verbindungsmittel mit einem anderen identischen Fahrweg (2) eines anderen Fahrzeugs (1), das als schwimmende Brücke dient, abnehmbar aneinander gelegt verbunden werden, um eine längere schwimmende Brücke zu bilden.

7. System nach Anspruch 6, **dadurch gekennzeichnet, dass** es die Verbindungsmittel ermöglichen, die Enden der beiden ausgeklappten Zugangsrampen (12) eines selben Endes des Fahrwegs (2) des Amphibienfahrzeugs (1) jeweils mit den Enden der beiden ausgeklappten Zugangsrampen (12) eines selben Endes des Fahrwegs (2) des anderen Amphibienfahrzeugs (1) aneinander zu legen.

8. System nach Anspruch 7, **dadurch gekennzeichnet, dass** die Verbindungsmittel folgendes umfassen: ein gelenkiges Scharnier (25), dessen Gelenke (26) der Enden einer der Zugangsrampen (12) jeweils in zugeordnete Ausschnitte (27) des Endes der anderen gegenüberliegenden Zugangsrampe (12) eingreifen, wobei ein Stift (28) durch die Ausschnitte (27) und die Gelenke (26) geht, um die Enden der Rampen (12) zusammenzufügen, und Schwingarmsätze (29, 30), die auf beiden Seiten der aneinander gelegten Rampen (12) angeordnet sind und einen mittleren Schwingarm (29), der mit einem entsprechenden Ende des Stifts (28) verbunden ist, indem er sich unter den Rampen (12) erstreckt, und zwei seitliche Schwingarme (30), die einerseits mit dem Ende des mittleren Schwingarms (29) gegenüber dem Stift (28) und andererseits jeweils mit den entsprechenden Seiten der Rampen (12) verbunden sind, umfassen.

9. System nach Anspruch 6, **dadurch gekennzeichnet, dass** es die Verbindungsmittel ermöglichen, die Enden der beiden Zugangsrampen (12) eines selben Endes des Fahrwegs (2) des Amphibienfahrzeugs (1), die ihre eingeklappte Position auf dem Fahrweg (2) einnehmen, jeweils mit den Enden der beiden Zugangsrampen (12) eines selben Endes des Fahrwegs (2) des anderen Amphibienfahrzeugs (1), die auch ihre eingeklappte Position auf diesem Fahrweg einnehmen, aneinander zu legen.

10. System nach Anspruch 6, **dadurch gekennzeichnet, dass** es die Verbindungsmittel ermöglichen, die Enden der beiden ausgeklappten Zugangsrampen (12) eines selben Endes des Fahrwegs (2) des Amphibienfahrzeugs (1) durch Überdecken mit den Enden der beiden ausgeklappten Zugangsrampen (12) eines selben Endes des Fahrwegs (2) des anderen Amphibienfahrzeugs (1) zu verbinden.

11. System nach einem der Ansprüche 4 bis 10, **dadurch gekennzeichnet, dass** die beiden Rampen (12) eines selben Endes des Fahrwegs (2) mit einer Platte (31) versehen sind, die zwischen den beiden Rampen (12) angeordnet ist und deren freies Ende wie eine Gleitkufe angehoben ist.

12. System nach einem der Ansprüche 4 bis 11, **dadurch gekennzeichnet, dass** es zum Absetzen des Fahrwegs über eine trockene Kluft einen Träger (5) zum Abstützen und Ablassen des Fahrwegs (2) umfasst, der annähernd auf der Längsachse des Fahrzeugs (1) angeordnet ist, im Verhältnis zum Fahrzeug entlang dieser Achse bewegbar ist zwischen einer inaktiven auf dem Fahrzeug (1) aufliegenden Position und einer im Verhältnis zum Fahrzeug überhängenden Ablassposition, in die der Fahrweg (2) in geführter Verschiebung auf dem Ablassträger (5) mitgenommen wird, ebenfalls in ein im Verhältnis zum Ablassträger (5) überhängende Position, und dass der Ablassträger (5) von einem schwenkbaren Gestell (6) abgestützt wird, indem er sich geführt auf diesem verschieben kann, wobei das Gestell (6) um eine feststehende waagerechte Achse (7) kippt, um ein Verschwenken des Trägers (5) zu ermöglichen, bis der Fahrweg (2) zunächst mit seinem überhängenden Ende auf dem Rand der Kluft gegenüber demjenigen, der sich seitens des Fahrzeugs (1) befindet, dann mit seinem Ende gegenüber dem fahrzeugseitigen Kluftrand zur Auflage kommt, wobei der Ablassträger (5) dann von dem Fahrweg (2) freigegeben wird, der auf der Kluft abgesetzt wird.

13. System nach Anspruch 12, **dadurch gekennzeichnet, dass** es mindestens einen Belastungsübernahmezylinder (32) umfasst, der sich hinten am Fahrzeug (1) unter dem Träger (5) befindet und dessen Rumpf (33) an dem Gestell (4) des Fahrzeugs (1) befestigt ist, und die Stange (34) befindet sich in gleitender Auflage unter dem Träger (5), wobei der Zylinder (32) steuerbar ist, um den Träger (5) um die Schwenkachse (7) des Kippgestells (6) abzukippen, um auch das Ende des Fahrwegs (2) zur Auflage auf dem entsprechenden Rand der zu überquerenden Kluft (B) zu bringen.

14. System nach Anspruch 12 oder 13, **dadurch gekennzeichnet, dass** es ferner Mittel (36) umfasst zum Festschnüren des Trägers (5) am Gestell (4) des Fahrzeugs (1), und umfassend einen steifen Rahmen (37), der rechtwinklig mit dem Gestell (4) einstückig ist, und zwei Backen (38), die gelenkig am Rahmen (37) angebracht sind und von einem Zylinder (39) gesteuert werden, der an dem Rahmen (37) angebracht ist, so dass jede Backe (38) einen entsprechenden unteren Teil (5a) des Trägers (5) umschließen kann.

15. System nach einem der vorhergehenden Ansprüche, **dadurch gekennzeichnet, dass** es von einem Flugzeug luftverfrachtbar ist.

16. System nach einem der vorhergehenden Ansprüche, **dadurch gekennzeichnet, dass** das Fahrzeug (1) davor einen Standfuß (46) umfasst, der auf dem Boden aufliegen kann, wenn der Fahrweg (2) über der trockenen Kluft abgesetzt wird und während das Fahrzeug (1) auf seinen Radachsen (17) aufliegt.

17. Verfahren zum Übertragen und Transportieren eines Fahrzeugs (VT) auf einem Fahrweg (2), der von einem Amphibienfahrzeug (1) getragen wird, um eine mit Wasser gefüllte Kluft zu überqueren, wobei das Verfahren das System nach einem der Ansprüche 1 bis 16 verwendet, **dadurch gekennzeichnet, dass** es folgende Schritte umfasst : Annähern des Amphibienfahrzeugs (1) an eines der Ufer der Kluft (B), Entfalten der aufblasbaren Seitenballaste (19) des Amphibienfahrzeugs (1), Entfalten der Rampen (12) auf einer selben Seite des Fahrwegs (2) in einer horizontalen Position in der Verlängerung seiner beiden Senkkästen (11), Ansteuern der hydraulischen Radaufhängungen des Amphibienfahrzeugs, um seine Radachsen (17) anzuheben, Ausrichten der beiden Rampen (12) eines selben Endes des Fahrwegs (2) im Verhältnis zu den beiden Senkkästen (11), um sie zur Auflage auf dem Ufer der Luft (B) zu bringen, wo sich das zu verladende Fahrzeug befindet, Verladen des Fahrzeugs (VT) auf dem Fahrweg (2), so dass es sich im Wesentlichen in dessen Mitte befindet, Anheben der beiden Rampen (12) bis zu ihrer waagerechten Position, Fortbewegen des Amphibienfahrzeugs (1) bis zum gegenüberliegenden Ufer, Ausrichten der beiden Rampen (12) des anderen Endes des Fahrwegs (2) im Verhältnis zu den beiden Senkkästen (11), um sie zur Auflage auf dem gegenüberliegenden Ufer der Kluft zu bringen, Entladen des transportierten Fahrzeugs (VT) auf dem gegenüberliegenden Ufer und Anheben der beiden Rampen (12) bis zu ihrer waagerechten Position.
